# EUROPEAN PATENT APPLICATION

(11) **EP 4 390 973 A1**
(43) Date of publication of application: **26.06.2024**
(21) Application number: 23768102.8
(22) Date of filing: 20.04.2023
(51) Int. Cl.: G21F 5/04, G21K 1/04

(54) **COLLIMATOR, RADIOACTIVE SOURCE BOX, DETECTOR, SURFACE DENSITY INSTRUMENT, DEVICE AND SYSTEM**

(30) Priority: 04.11.2022 CN 202222988249 U
(71) Applicant: Contemporary Amperex Technology Co., Limited, Ningde City, Fujian 352100 (CN)
(72) Inventor: ZHEN, Zhihui, Fujian 352100 (CN); ZHANG, Jingdong, Fujian 352100 (CN); WANG, Qiangjun, Fujian 352100 (CN); CHEN, Weigang, Fujian 352100 (CN); ZHAN, Bingyang, Fujian 352100 (CN); WU, Qian, Fujian 352100 (CN); YAN, Liangjie, Fujian 352100 (CN)
(74) Representative: Ran, Handong
(86) International application number: PCT/CN2023/089595
(87) International publication number: WO 2024/093159

(57) **Abstract**

This application provides a collimator, a radioactive source kit, a detector, a surface density gauge, an apparatus, and a system, and pertains to the field of battery technologies. The collimator includes a shield plate and a driving mechanism. The shield plate is configured to variably shield rays projected onto the collimator. The driving mechanism is configured to drive the shield plate to adjust a shape of a radiating surface of rays penetrating the collimator.

## Description

### CROSS-REFERENCE TO RELATED APPLICATIONS

This application refers to Chinese Patent Application No. 202222988249.0, filed on November 04, 2022 and entitled "COLLIMATOR, RADIOACTIVE SOURCE KIT, DETECTOR, SURFACE DENSITY GAUGE, APPARATUS, AND SYSTEM", which is incorporated herein by reference in its entirety.

### TECHNICAL FIELD

This application relates to the field of battery technologies, and in particular, to a collimator, a radioactive source kit, a detector, a surface density gauge, an apparatus, and a system.

### BACKGROUND

A radioactive source is a substance or entity made of a radioactive substance and capable of producing radiation exposure. Radioactive sources have been widely used in the fields such as industry, agriculture, healthcare, isotope instruments, and scientific research. For example, a surface density gauge includes a radioactive source and a detector. When rays emitted by the radioactive source penetrate an inspected object, they are reflected, scattered, and absorbed by the inspected object, resulting in a certain attenuation of intensity of the penetrated rays detected by the detector relative to intensity of the incident rays. By measuring the intensity of the rays before and after penetration, a surface density of the inspected object can be deduced. The radioactive source is placed in a radioactive source kit, the radioactive source kit is provided with a predetermined opening, and the rays emitted by the radioactive source are emitted through the predetermined opening and projected onto the inspected object. The radioactive source kits are widely used in various detecting instruments such as surface density gauges.

In production of an electrode plate of a battery, a surface density of the electrode plate can be detected by the surface density gauge, then a net weight of a slurry on the electrode plate is determined according to the density of the electrode plate, and a coating mass is reflected through the net weight of the slurry. The surface density of the electrode plate is not uniform due to the influence of the material and coating process of the electrode plate, which affects accuracy of the net weight detection of the electrode plate and thus affects the coating mass. How the accuracy of the net weight detection of the electrode plate is improved has become an urgent technical problem to be solved.

### SUMMARY

This application is intended to solve at least one of the technical problems in the background. In view of this, an objective of this application is to provide a collimator, a radioactive source kit, a detector, a surface density gauge, an apparatus, and a system, so as to solve the problem of narrow applicability of a surface density gauge in the related art.

An embodiment according to a first aspect of this application provides a collimator, where the collimator includes: a shield plate configured to variably shield rays projected onto the collimator; and a driving mechanism configured to drive the shield plate to adjust a shape of a radiating surface of rays penetrating the collimator.

In the technical solution in this embodiment of this application, the rays are projected onto the collimator and then emitted, and the driving mechanism can drive the shield plate to adjust the shape of the radiating surface of the rays penetrating the collimator, which is more flexible to meet the requirements for different shapes of the radiating surface of the rays.

In some embodiments, the shield plate is provided with a window, and the driving mechanism is configured to drive the shield plate such that the rays are able to be emitted through the window. Therefore, the shape of the radiating surface of the rays penetrating the collimator can be changed through the window.

In some embodiments, the window includes a first sub-window and a second sub-window, the first sub-window and the second sub-window having different shapes. Providing two windows, namely, the first sub-window and the second sub-window, on the shield plate can adjust the shape of the radiating surface by adjusting the rays to be emitted through one of the first sub-window or the second sub-window.

In some embodiments, in at least one direction, the first sub-window and the second sub-window have different sizes. Therefore, radiating surfaces of rays emitted through the first sub-window and the second sub-window have different sizes, ensuring that the rays can form radiating surfaces with different sizes after penetrating the collimator.

In some embodiments, the driving mechanism is configured to drive the shield plate to move, so as to adjust a shielding area of the shield plate to the rays projected onto the collimator. The shielding area of the shield plate to the rays projected onto the collimator can be adjusted to adjust the shape of the radiating surface.

In some embodiments, the shield plate includes a first sub-shield plate and a second sub-shield plate, and the driving mechanism is configured to drive the first sub-shield plate and the second sub-shield plate to approach each other or leave away from each other to adjust the shielding area to the rays projected onto the collimator. The first sub-shield plate and the second sub-shield plate approach each other or leave away from each other to adjust the shielding area of the shield plate to the predetermined opening, so as to adjust the shapes of the radiating surface. In this way, more shapes of the radiating surface can be adjusted, to be specific, both the shape that can be adjusted by one shield plate and the shape that cannot be adjusted by one shield plate can be adjusted. The shapes can be flexibly adjusted according to a shape of an inspected object, with wider applicability.

An embodiment according to a second aspect of this application provides a radioactive source kit, where the radioactive source kit includes a radioactive source and the collimator in the foregoing embodiment, and rays emitted by the radioactive source are emitted through the collimator. Therefore, a shape of a radiating surface of the rays emitted through the radioactive source kit can be adjusted to meet the requirements for different shapes of the radiating surface of the rays.

In some embodiments, the radioactive source kit further includes: a protective holder having an accommodating groove, the accommodating groove having a predetermined opening; where the radioactive source is placed in the accommodating groove, the rays emitted by the radioactive source are emitted through the predetermined opening, and the shield plate is located at the predetermined opening. When the radioactive source kit is applied to a surface density gauge, the shape of the radiating surface formed by the rays emitted by the radioactive source can be adjusted according to an inspected object, such that the surface density gauge can detect inspected objects with different shapes, improving adaptability of the surface density gauge.

In some embodiments, when the shield plate is provided with a window and the window includes a first sub-window and a second sub-window, the shield plate covers the predetermined opening, the first sub-window and the second sub-window are distributed along a circumferential direction A of the shield plate, and the shield plate is configured to be rotatable such that one of the first sub-window and the second sub-window corresponds to the predetermined opening. A driving mechanism can control the shield plate to rotate around a rotating center, such that one of the first sub-window and the second sub-window corresponds to the predetermined opening, achieving the adjustment of the shape of the radiating surface.

In some embodiments, when the shield plate is provided with a window and the window includes a first sub-window and a second sub-window, the first sub-window and the second sub-window are distributed along a predetermined direction B, and the shield plate is configured to be movable in a straight line along the predetermined direction B such that one of the first sub-window and the second sub-window corresponds to the predetermined opening. The driving mechanism can control the shield plate to be movable in a straight line along the predetermined direction B, such that one of the first sub-window and the second sub-window corresponds to the predetermined opening, achieving the adjustment of the shape of the radiating surface.

In some embodiments, the shield plate is configured to shield the predetermined opening, and the driving mechanism is configured to drive the shield plate to move, so as to adjust a shielding area of the shield plate to the predetermined opening in a direction perpendicular to an optical axis of the radioactive source. The shielding area of the shield plate to the predetermined opening can be adjusted to adjust the shape of the radiating surface.

In some embodiments, the radioactive source kit further includes: an elastic member located in the accommodating groove, where one end of the elastic member is fixedly connected to the bottom of the accommodating groove, and the other end of the elastic member is close to the predetermined opening; and a baffle located at the predetermined opening, where at least part of the baffle is located in the accommodating groove and fixedly connected to the protective holder, the baffle has a baffle opening, the baffle opening corresponds to the predetermined opening, and the shield plate is located on a side of the baffle away from the protective holder. At least part of the baffle is located in the accommodating groove and fixedly connected to the protective holder, which means that the baffle forms a circle of protrusions in the accommodating groove, and the other end of the elastic member is connected to the radioactive source, such that the elastic member can press the radioactive source on the baffle, in other words, the radioactive source is fixed in the accommodating groove through the elastic member and the baffle, preventing the radioactive source from shaking to affect the detection result.

In some embodiments, the radioactive source kit further includes: a position detector located on at least one side of the protective holder, where the position detector is in communication connection with the driving mechanism, and the position detector is configured to detect a position of the radioactive source kit and generate a detection result based on the position of the radioactive source kit; where the driving mechanism is configured to perform, based on the detection result of the position detector, an operation of driving the collimator to adjust a shape of a radiating surface of rays emitted by the radioactive source. The driving mechanism performs, based on the detection result of the position detector, the operation of driving the collimator to adjust the shape of the radiating surface of the rays emitted by the radioactive source, such that the shape of the radiating surface can be automatically adjusted based on the position detected by the position detector, achieving automatic adjustment, which is more convenient.

In some embodiments, the radioactive source kit includes at least two position detectors, the at least two position detectors being located on two opposite sides of the protective holder respectively. It takes a certain time to adjust the shield plate, and a position of the position detector can be determined first based on the position information detected by the position detector. A position to which the radioactive source is about to move is determined based on the position information of the position detector, and then the shield plate is adjusted, such that the radioactive source can form a radiating surface of a corresponding shape on the inspected object when moving to a corresponding detection region.

In some embodiments, the position detector is a fiber optic position detector. The fiber optic position detector has high detection accuracy.

In some embodiments, the radioactive source kit further includes a housing having an accommodating cavity, where the protective holder and the collimator are both located in the accommodating cavity. The housing is provided and the protective holder and the collimator are both placed in the accommodating cavity, so as to protect the protective holder and the collimator as well as the radioactive source.

An embodiment according to a third aspect of this application provides a detector, where the detector includes: the collimator in the foregoing embodiment; and a detection element opposite the collimator, where the detection element is configured to receive the rays penetrating the collimator. The rays emitted by the radioactive source are detected by the detection element after penetrating an inspected object and then the collimator, and a shape or size of a radiating surface received by the detection element 7 can be changed based on a shape of the inspected object, with a wider applicable range.

An embodiment according to a fourth aspect of this application provides a surface density gauge, where the surface density gauge includes a radioactive source kit, a detector, and a surface density calculation unit; and rays emitted by a radioactive source are used to be projected onto a to-be-inspected object, the detector is configured to detect information about rays penetrating the to-be-inspected object, and the surface density calculation unit is configured to calculate a surface density of the to-be-inspected object based on the information about the rays detected by the detector; where the radioactive source kit and the detector satisfy at least one of the following conditions: the radioactive source kit is the radioactive source kit in the foregoing embodiment; and the detector is the detector in the foregoing embodiment. The surface density gauge can adjust a shape of a radiating surface based on a shape of the inspected object, making the surface density gauge have wider applicability.

An embodiment according to a fifth aspect of this application provides a surface density gauge, where the surface density gauge includes a radioactive source kit, a detector, and a surface density calculation unit, rays emitted by a radioactive source are used to be projected onto a to-be-inspected object, the detector is configured to detect information about rays penetrating the to-be-inspected object, and the surface density calculation unit is configured to calculate a surface density of the to-be-inspected object based on the information about the rays detected by the detector; and the surface density gauge further includes a collimator, the collimator being disposed in the radioactive source kit or the detector, where the collimator includes a shield plate and a driving mechanism, the shield plate being configured to variably shield the rays emitted by the radioactive source, and the driving mechanism being configured to drive the shield plate to adjust a shape of a radiating surface of rays penetrating the collimator.

In some embodiments, the shield plate is provided with a window, and the driving mechanism is configured to drive the shield plate such that the rays are able to be emitted through the window.

In some embodiments, the window includes a first sub-window and a second sub-window, the first sub-window and the second sub-window having different shapes.

In some embodiments, in at least one direction, the first sub-window and the second sub-window have different sizes.

In some embodiments, the driving mechanism is configured to drive the shield plate to move, so as to adjust a shielding area of the shield plate to the rays projected onto the collimator.

In some embodiments, the shield plate includes a first sub-shield plate and a second sub-shield plate, and the driving mechanism is configured to drive the first sub-shield plate and the second sub-shield plate to approach each other or leave away from each other to adjust the shielding area to the rays projected onto the collimator.

An embodiment according to a sixth aspect of this application provides a weight detection apparatus of electrode plate, where the weight detection apparatus of electrode plate includes: the surface density gauge in the foregoing embodiment, configured to detect surface density information of an electrode plate, where a detection element of the detector and the radioactive source are configured to be disposed correspondingly on two opposite sides of the electrode plate; and a detection unit in communication connection with the surface density gauge and configured to calculate a weight of a slurry on the electrode plate based on the surface density information of the electrode plate calculated by the surface density gauge. The surface density gauge can adjust a shape of a radiating surface formed on the electrode plate by the surface density gauge based on shapes of different regions of the electrode plate, such that the surface density gauge can adapt to different regions of the electrode plate for surface density detection, improving accuracy of detection results. Then, the detection unit calculates the weight of the slurry on the electrode plate based on the detected surface density information.

In some embodiments, the electrode plate includes a plurality of blank regions and at least one coating region that are staggered along a width direction of the electrode plate, and the radiating surface includes a first radiating surface and a second radiating surface, the first radiating surface being a projection surface of the radioactive source on the blank region and the second radiating surface being a projection surface of the radioactive source on the coating region; and the surface density gauge is configured to scan the electrode plate along the width direction C of the electrode plate, where during one scanning of the electrode plate by the surface density gauge along the width direction C of the electrode plate, the first radiating surface and the second radiating surface have different shapes. Because the blank regions and the coating region are arranged along the width direction C of the electrode plate, the surface density gauge goes through the blank regions and the coating region during the one scanning. The first radiating surface and second radiating surface have different shapes, so as to ensure that the blank regions and the coating region can be detected simultaneously.

In some embodiments, the window on the shield plate includes a first sub-window and a second sub-window; where the first sub-window is rectangular and the second sub-window is circular, and a side length of the first sub-window in the width direction C of the electrode plate is smaller than a diameter of the second sub-window. This ensures that the size of the first sub-window can fall within the blank regions and the size of the second sub-window is large enough, improving the accuracy.

An embodiment according to a seventh aspect of this application provides an electrode plate production system, where the electrode plate production system includes: a coater configured to apply a slurry onto a coating region on a surface of an electrode plate; and a surface density gauge configured to detect a surface density of a blank region of the electrode plate with a first-shaped radiating surface and detect a surface density of the coating region of the electrode plate with a second-shaped radiating surface.

An embodiment according to an eighth aspect of this application provides an electrode plate production system, where the electrode plate production system includes: a coater configured to apply a slurry onto a coating region on a surface of an electrode plate; a first surface density gauge configured to detect a surface density of a blank region of the electrode plate; and a second surface density gauge configured to detect a surface density of the coating region of the electrode plate; where radiating surfaces formed on the electrode plate by the first surface density gauge and the second surface density gauge have different shapes.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

In the accompanying drawings, unless otherwise specified, the same reference signs throughout a plurality of accompanying drawings indicate the same or similar components or elements. The accompanying drawings are not necessarily drawn to scale. It should be understood that these accompanying drawings merely describe some embodiments disclosed in this application, and should not be construed as any limitation on the scope of this application. To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a collimator according to an embodiment of this application;
FIG. 2 is a schematic structural diagram of a radioactive source kit according to an embodiment of this application;
FIG. 3 is a top view of a radioactive source kit according to an embodiment of this application;
FIG. 4 is a schematic structural diagram of a shield plate according to an embodiment of this application;
FIG. 5 is a schematic structural diagram of another shield plate according to an embodiment of this application;
FIG. 6 is a schematic structural diagram of another shield plate according to an embodiment of this application;
FIG. 7 is a schematic structural diagram of another shield plate according to an embodiment of this application;
FIG. 8 is a schematic structural diagram of another shield plate according to an embodiment of this application;
FIG. 9 is a schematic structural diagram of a shield plate fitting with a predetermined opening according to an embodiment of this application;
FIG. 10 is a schematic structural diagram of a shield plate fitting with a predetermined opening according to an embodiment of this application;
FIG. 11 is a cross-sectional view of an A-A section of the radioactive source kit shown in FIG. 3;
FIG. 12 is a schematic structural diagram of a protective cartridge, a radioactive source, an elastic member, and a baffle fitting with each other according to an embodiment of this application;
FIG. 13 is a schematic structural diagram of a detector according to an embodiment of this application;
FIG. 14 is a schematic structural diagram of a surface density gauge according to an embodiment of this application;
FIG. 15 is a block diagram of a surface density gauge according to an embodiment of this application;
FIG. 16 is a schematic structural diagram of an electrode plate production system according to an embodiment of this application;
FIG. 17 is a block diagram of a weight detection apparatus of electrode plate according to an embodiment of this application;
FIG. 18 is a top view of an electrode plate according to an embodiment of this application; and
FIG. 19 is a top view of an electrode plate according to an embodiment of this application.

Reference signs are described as follows:
1. collimator; 11. shield plate; 111. first sub-shield plate; 112. second sub-shield plate; 12. driving mechanism; 13. window; 131. first sub-window; 132. second sub-window; 133. third sub-window; 14. rotating center; 2. protective holder; 20. radioactive source; 21. accommodating groove; 22. predetermined opening; 23. fixed holder; 231. fixed groove; 24. protective cartridge; 241. protective hole; 242. protective jacket; 243. protective liner; 244. protective lead; 3. elastic member; 4. baffle; 41. baffle opening; 42. protrusion; 5. position detector; 6. housing; 61. accommodating cavity; 7. detection element; 8. detection housing; 81. detection cavity; 10. radioactive source kit; 20. radioactive source; 30. detector; 50. surface density calculation unit; 60. surface density gauge; 601. first surface density gauge; 602. second surface density gauge; 70. electrode plate; 701. blank region; 702. coating region; 80. detection unit; 901. first radiating surface; 902. second radiating surface; 110. first coater; and 120. second coater.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "a plurality of" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the descriptions of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships shown in the accompanying drawings. These terms are merely for ease and brevity of description of the embodiments of this application rather than indicating or implying that the apparatuses or elements mentioned must have specific orientations or must be constructed or manipulated according to specific orientations, and therefore shall not be construed as any limitations on the embodiments of this application.

In the descriptions of the embodiments of this application, unless otherwise specified and defined explicitly, the technical terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from a perspective of the market development, traction batteries have been increasingly widely used. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of traction batteries, market demands for the traction batteries are also expanding.

The inventor has noted that in production of an electrode plate of a battery, a surface density gauge is used to detect a weight of a slurry on the electrode plate. During the detection, a radiating surface is formed on the electrode plate by a radioactive source of the surface density gauge. The electrode plate includes a coating region and a blank region that are alternately arranged, and a width of the coating region is larger than a width of the blank region. For the blank region with smaller width, the surface density gauge is required to form a small radiating surface, so as to ensure that the entire radiating surface falls within the blank region, preventing the radiating surface from falling within the coating region to affect weight detection of the blank region. For the coating region with larger width, the surface density gauge is required to form a large radiating surface, so as to prevent the radiating surface from being excessively small to affect accuracy. However, in the related art, a size and shape of a radiating surface formed on an electrode plate by a surface density gauge are fixed, which makes it impossible for the surface density gauge to detect a coating region and a blank region of the electrode plate simultaneously.

The inventor has proposed through research a collimator. The collimator includes a shield plate and a driving mechanism. The shield plate is configured to control a radiating surface of rays emitted by a radioactive source, and the rays emitted by the radioactive source are emitted through a predetermined opening. The driving mechanism is connected to the shield plate, and the driving mechanism is configured to drive the shield plate to adjust a shape of the radiating surface of the rays emitted by the radioactive source. When the collimator is applied to a surface density gauge, the shape of the radiating surface formed by the rays emitted by the radioactive source can be adjusted according to an inspected object, such that the surface density gauge can detect inspected objects with different sizes or shapes, improving adaptability of the surface density gauge.

The collimator disclosed in the embodiments of this application can be used without limitation in the surface density gauge, and can also be used in other detecting instruments that need a radioactive source, which is conducive to improving applicability of the detecting instruments.

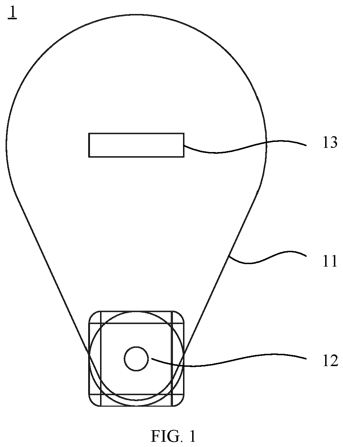

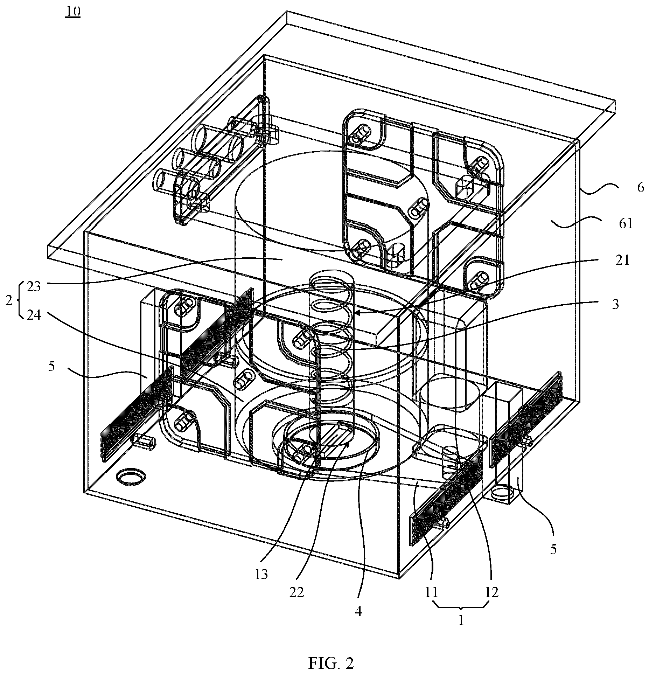

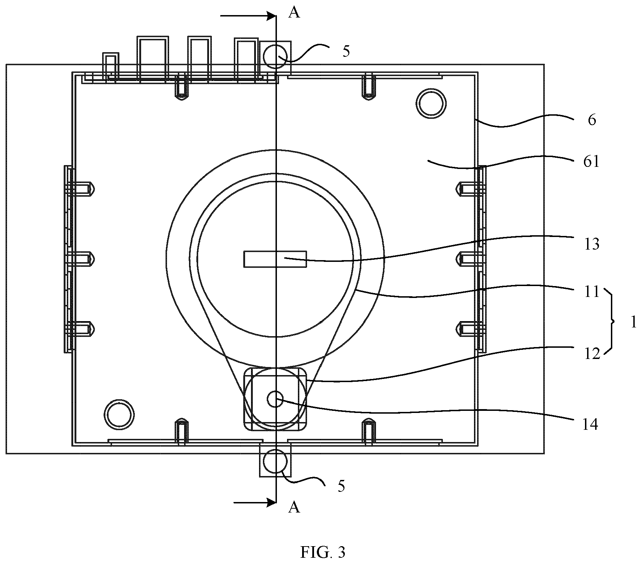

An embodiment of this application provides a collimator. FIG. 1 is a schematic structural diagram of a collimator according to an embodiment of this application. Referring to FIG. 1, a collimator 1 includes a shield plate 11 and a driving mechanism 12. FIG. 2 is a schematic structural diagram of a radioactive source kit according to an embodiment of this application. FIG. 3 is a top view of a radioactive source kit according to an embodiment of this application. With reference to FIG. 1 to FIG. 3, the shield plate 11 is configured to variably shield rays projected onto the collimator 1. The driving mechanism 12 is configured to drive the shield plate 11 to adjust a shape of a radiating surface of rays penetrating the collimator 1.

In this embodiment of this application, under the condition that the collimator is applied to a surface density gauge, the radiating surface is a detection surface detected by the surface density gauge.

In this embodiment of this application, a difference in shape includes a difference in at least one of shape and size.

For example, adjusting the shape of the radiating surface is adjusting a shape of the radiating surface, and in this case, a size of the radiating surface changes accordingly. For example, the shape of the radiating surface is adjusted from circular to rectangular through the shield plate 11. Alternatively, adjusting the shape of the radiating surface is adjusting a size of the radiating surface, but the shape of the radiating surface keeps unchanged. For example, the shape of the radiating surface is always circular, but a diameter of the circular radiating surface is reduced by the shield plate 11. Alternatively, adjusting the shape of the radiating surface is adjusting a shape and size of the radiating surface. For example, the shape of the radiating surface is adjusted from equilateral triangle to right triangle through the shield plate 11, and three sides of the two triangles are not equal to each other.

For example, the driving mechanism 12 may be a motor, and a transmission shaft of the motor is connected to the shield plate 11 to control the shield plate to move. The motor is an easily accessible power source, simple to install and inexpensive, which can reduce manufacturing costs of the collimator 1.

In this embodiment of this application, the rays are projected onto the collimator 1 and then emitted, and the driving mechanism 12 can drive the shield plate 11 to adjust the shape of the radiating surface of the rays penetrating the collimator 1, which is more flexible to meet the requirements for different shapes of the radiating surface of the rays.

For example, under the condition that the collimator 1 is applied to a surface density gauge and that an inspected object is an electrode plate, a shape of a radiating surface can be adjusted according to sizes of a blank region and a coating region of the electrode plate, and the surface density gauge can detect surface densities of the blank region and the coating region of the electrode plate simultaneously.

For ease of description, in this embodiment of this application, the electrode plate is used as the inspected object. Certainly, the inspected object may alternatively be other substances, which is not limited in this application.

According to some embodiments of this application, referring to FIG. 1 and FIG. 3, the shield plate 11 is provided with a window 13, and the driving mechanism 12 is configured to drive the shield plate 11 such that the rays can be emitted through the window 13.

In these embodiments of this application, assuming that the rays are emitted through a predetermined opening 22, when the window 13 corresponds to the predetermined opening 22, the rays emitted by a radioactive source 20 are emitted through the predetermined opening 22 and the window 13 in sequence; and when the window 13 is offset from the predetermined opening 22, the rays emitted by the radioactive source 20 are emitted through the predetermined opening 22.

In these embodiments of this application, the window 13 can be changed to change the shape of the radiating surface of the rays penetrating the collimator.

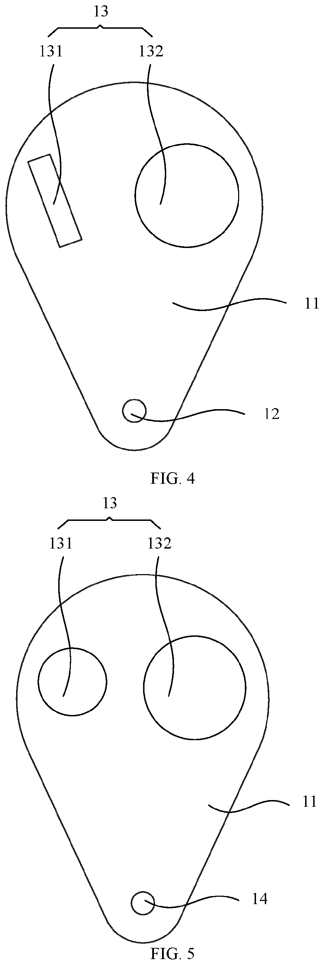

According to some embodiments of this application, FIG. 4 is a schematic structural diagram of a shield plate according to an embodiment of this application. FIG. 5 is a schematic structural diagram of another shield plate according to an embodiment of this application. Referring to FIG. 4 and FIG. 5, the window 13 includes a first sub-window 131 and a second sub-window 132, the first sub-window 131 and the second sub-window 132 having different shapes.

In an implementation of these embodiments of this application, the first sub-window 131 and the second sub-window 132 have different shapes. For example, the first sub-window 131 is rectangular and the second sub-window 132 is circular.

In another implementation of these embodiments of this application, the first sub-window 131 and the second sub-window 132 have the same shape but different sizes. For example, the first sub-window 131 and the second sub-window 132 are both circular, but a diameter of the first sub-window 131 is smaller than a diameter of the second sub-window 132.

In another implementation of these embodiments of this application, the first sub-window 131 and the second sub-window 132 have different shapes, and the first sub-window 131 and the second sub-window 132 have different sizes. For example, the first sub-window 131 is a right-angled trapezoid and the second sub-window 132 is an isosceles trapezoid, and four sides of the right-angled trapezoid and the isosceles trapezoid are not equal to each other.

In these embodiments of this application, providing two windows, namely, the first sub-window 131 and the second sub-window 132, on the shield plate 11 can adjust the shape of the radiating surface by adjusting the rays to be emitted through one of the first sub-window 131 or the second sub-window 132.

The shapes and number of the windows 13 shown in FIG. 4 and FIG. 5 are only an example. In other implementations, the window 13 may be of other shapes, and the window 13 may further include more sub-windows.

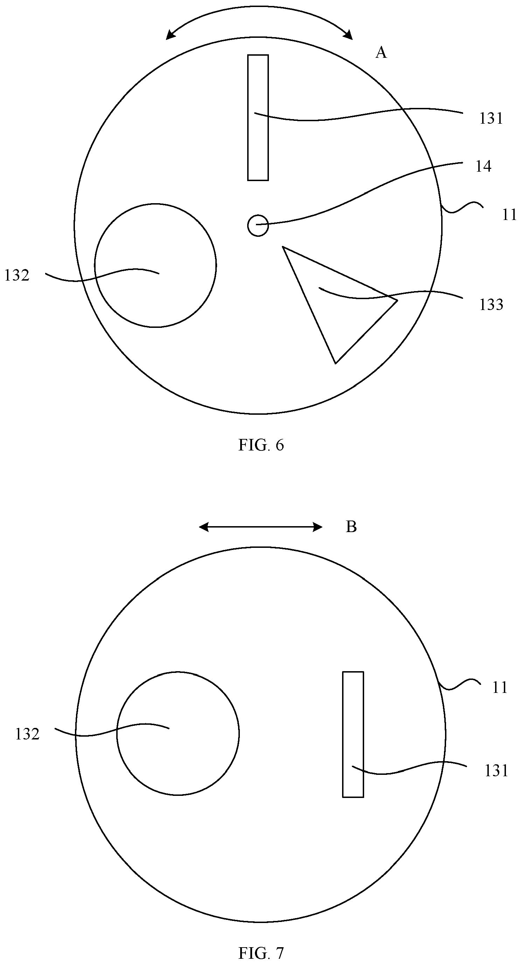

FIG. 6 is a schematic structural diagram of another shield plate according to an embodiment of this application. Referring to FIG. 6, the window 13 further includes a third sub-window 133, and the third sub-window 133 is triangular.

In other implementations, the window 13 may further include other regular or irregular sub-windows.

According to some embodiments of this application, in at least one direction, the first sub-window 131 and the second sub-window 132 have different sizes. For example, the size of the first sub-window 131 is smaller than the size of the second sub-window 132.

In an implementation of these embodiments of this application, under the condition that the first sub-window 131 is rectangular and that the second sub-window 132 is circular, in a movement direction of the shield plate 11, a width of the first sub-window 131 is smaller than a diameter of the second sub-window 132.

In another implementation of these embodiments of this application, under the condition that the first sub-window 131 and the second sub-window 132 are both circular, in a movement direction of the shield plate 11, a diameter of the first sub-window 131 is smaller than a diameter of the second sub-window 132.

In these embodiments of this application, the first sub-window 131 and the second sub-window 132 have different sizes, such that radiating surfaces of rays emitted through the first sub-window 131 and the second sub-window 132 have different sizes, ensuring that the rays can form radiating surfaces with different sizes after penetrating the collimator 1.

In these embodiments of this application, when the size of the first sub-window 131 is smaller than the size of the second sub-window 132 and the first sub-window 131 and the second sub-window 132 have different shapes, the size of the radiating surface formed by the rays penetrating the first sub-window 131 can be smaller than the size of the radiating surface formed by the rays penetrating the second sub-window 132, such that the radiating surface formed by the rays emitted by the radioactive source can be projected onto the coating region and the blank region of the electrode plate, thereby realizing that the surface density gauge using the collimator in the embodiments of this application can detect the coating region and the blank region of the electrode plate simultaneously.

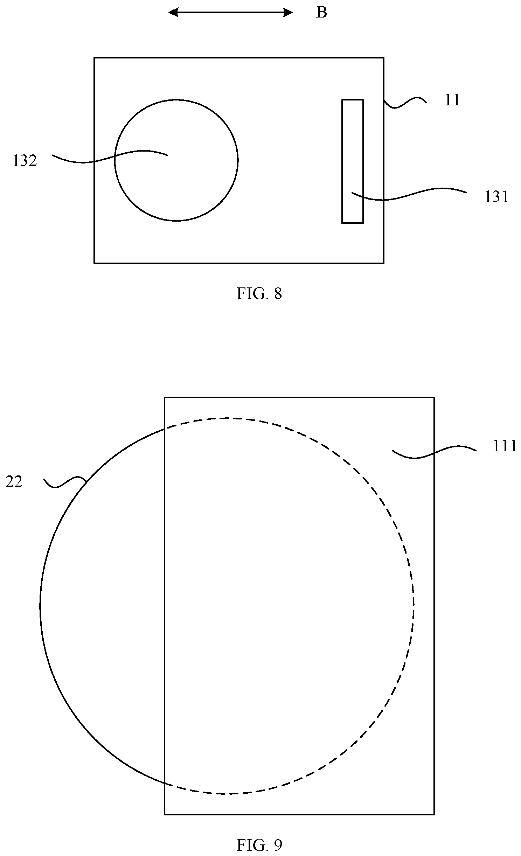

According to some embodiments of this application, referring to FIG. 4 to FIG. 6, the first sub-window 131 and the second sub-window 132 are distributed along a circumferential direction A of the shield plate 11, and the shield plate 11 is configured to be rotatable to enable one of the first sub-window 131 and the second sub-window 132 to adjust the shape of the radiating surface. FIG. 7 is a schematic structural diagram of another shield plate according to an embodiment of this application. FIG. 8 is a schematic structural diagram of another shield plate according to an embodiment of this application. Referring to FIG. 7 and FIG. 8, the first sub-window 131 and the second sub-window 132 are distributed along a predetermined direction B, and the shield plate 11 is configured to be movable in a straight line along the predetermined direction B to adjust the shape of the radiating surface of one of the first sub-window 131 and the second sub-window 132.

According to some embodiments of this application, FIG. 9 is a schematic structural diagram of a shield plate fitting with a predetermined opening according to an embodiment of this application. Referring to FIG. 9, the driving mechanism 12 is configured to drive the shield plate 11 to move, so as to adjust a shielding area of the shield plate 11 to rays projected onto the collimator 1.

In these embodiments of this application, the shape of the radiating surface can be adjusted by adjusting the shielding area of the shield plate 11 to the rays projected onto the collimator 1.

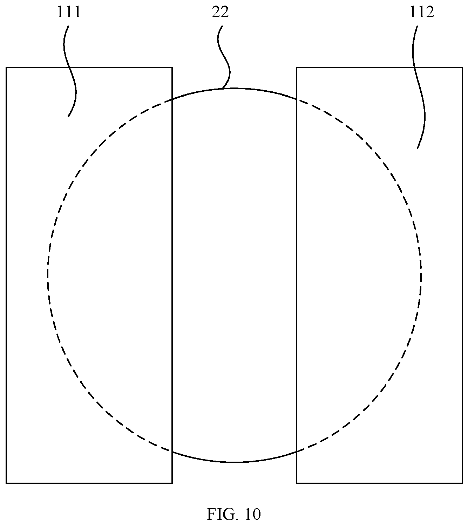

According to some embodiments of this application, FIG. 10 is a schematic structural diagram of a shield plate fitting with a predetermined opening according to an embodiment of this application. Referring to FIG. 10, the shield plate 11 includes a first sub-shield plate 111 and a second sub-shield plate 112, and the driving mechanism 12 (not shown in FIG. 10) is configured to drive the first sub-shield plate 111 and the second sub-shield plate 112 to approach each other or leave away from each other to adjust the shielding area to the rays projected onto the collimator 1.

In these embodiments of this application, the shielding area of the shield plate 11 to the predetermined opening 22 may be adjusted by driving the first sub-shield plate 111 to approach or leave the second sub-shield plate 112 with the second sub-shield plate 112 remaining stationary, or by driving the second sub-shield plate 112 to approach or leave the first sub-shield plate 111 with the first sub-shield plate 111 remaining stationary, or by driving the first sub-shield plate 111 and the second sub-shield plate 112 to move simultaneously to approach each other or leave away from each other.

In these embodiments of this application, the first sub-shield plate 111 and the second sub-shield plate 112 approach each other or leave away from each other to adjust the shielding area of the shield plate 11 to the predetermined opening 22, so as to adjust the shape of the radiating surface. In this way, more shapes of the radiating surface can be adjusted, to be specific, both the shape that can be adjusted by one shield plate and the shape that cannot be adjusted by one shield plate can be adjusted. The shapes can be flexibly adjusted according to the shape of the inspected object, with wider applicability.

An embodiment of this application further provides a radioactive source kit. Referring to FIG. 2, the radioactive source kit 10 includes the collimator 1 in the foregoing embodiment and a radioactive source 20 (not shown in FIG. 2), and rays emitted by the radioactive source 20 are emitted through the collimator 1.

The radioactive source kit provided in this embodiment of this application can adjust a shape of a radiating surface of the rays emitted through the radioactive source kit to meet the requirements for different shapes of the radiating surface of the rays.

According to some embodiments of this application, referring to FIG. 2, the radioactive source kit 10 further includes a protective holder 2, where the protective holder 2 has an accommodating groove 21, and the accommodating groove 21 has a predetermined opening 22. The radioactive source 20 is placed in the accommodating groove 21, the rays emitted by the radioactive source 20 are emitted through the predetermined opening 22, and the shield plate 11 is located at the predetermined opening 22.

In these embodiments of this application, the accommodating groove 21 is configured to place the radioactive source, and the protective holder 2 is configured to shield the rays emitted by the radioactive source 20, such that the rays can only be emitted through the predetermined opening 22, so as prevent the rays from being emitted through other places to cause harm to bodies of workers.

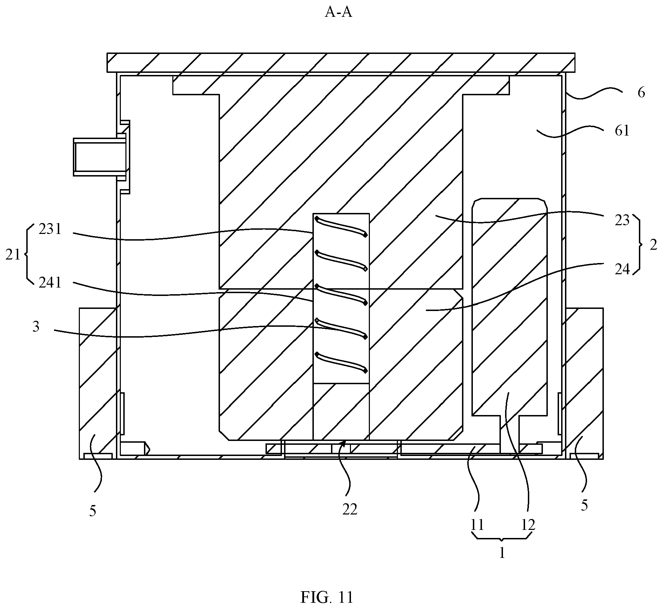

FIG. 11 is a cross-sectional view of an A-A section of the radioactive source kit shown in FIG. 3. Referring to FIG. 2 and FIG. 11, the protective holder 2 includes a fixed holder 23 and a protective cartridge 24. The fixed holder 23 has a fixed groove 231, the protective cartridge 24 has a protective hole 241, and the fixed groove 231 is in communication with the protective hole 241 to form the accommodating groove 21 together. The fixed holder 23 is configured to fix the protective cartridge 24 and stabilize the protective cartridge 24, and the radioactive source 20 is located in the protective hole 241. An opening on one end of the protective hole 241 is in communication with an opening of the fixed groove 231, and an opening on the other end of the protective hole 241 is the predetermined opening 22.

In an implementation of these embodiments of this application, a side wall of the protective cartridge 24 may be made of concrete, iron, lead, or the like, ensuring a protection effect of the protective cartridge 24.

In these embodiments of this application, the driving mechanism 12 is located in the accommodating groove 21.

In an implementation of these embodiments of this application, the radioactive source 20 may be an X-ray source.

In another implementation of these embodiments of this application, the radioactive source 20 may be a β-ray source.

In these embodiments of this application, when the radioactive source kit 10 is applied to a surface density gauge, the shape of the radiating surface formed by the rays emitted by the radioactive source 20 can be adjusted according to the inspected object, such that the surface density gauge can detect inspected objects with different sizes, improving adaptability of the surface density gauge.

In an embodiment of this application, when the shield plate 11 is provided with a window 13 and the window 13 includes a first sub-window 131 and a second sub-window 132, the shield plate 11 covers the predetermined opening 22, the first sub-window 131 and the second sub-window 132 are distributed along a circumferential direction A of the shield plate 11, and the shield plate 11 is configured to be rotatable such that one of the first sub-window 131 and the second sub-window 132 corresponds to the predetermined opening 22.

Referring to FIG. 4 and FIG. 6, the shield plate 11 has a rotating center 14, and the shield plate 11 rotates around the rotating center 14. In FIG. 4 and FIG. 5, the shield plate 11 is irregular, and the windows 13 and the rotating center 14 are located on two ends of the shield plate 11. In FIG. 6, the shield plate 11 is circular, the windows 13 are arranged around the circumference of the shield plate 11, and the rotating center 14 is located at the center of the circle.

In an implementation of these embodiments of this application, the driving mechanism 12 is configured to drive the shield plate 11 to move at the predetermined opening 22, and the shield plate 11 shields the predetermined opening 22 to adjust the shape of the radiating surface of the rays emitted by the radioactive source 20. Under the condition that the window 13 corresponds to or is offset from the predetermined opening 22, the rays emitted by the radioactive source 20 are emitted through the predetermined opening 22 and the window 13 in sequence, or the rays emitted by the radioactive source 20 are emitted through the predetermined opening 22. In addition, under the condition that the window 13 is offset from the predetermined opening 22 and that the shield plate 11 does not shield the predetermined opening 22, the rays emitted by the radioactive source 20 are emitted through the predetermined opening 22. In this case, the radiating surface and the predetermined opening 22 have the same shape.

According to some embodiments of this application, the first sub-window 131 and the predetermined opening 22 have different shapes.

In an implementation of these embodiments of this application, the first sub-window 131 and the predetermined opening 22 have different shapes. For example, the first sub-window 131 is rectangular and the predetermined opening 22 is circular.

In another implementation of these embodiments of this application, the first sub-window 131 and the predetermined opening 22 have the same shape but different sizes. For example, the first sub-window 131 and the second sub-window 132 are both circular, but a diameter of the first sub-window 131 is smaller than a diameter of the predetermined opening 22.

In another implementation of these embodiments of this application, the first sub-window 131 and the predetermined opening 22 have different shapes, and the first sub-window 131 and the predetermined opening 22 have different sizes. For example, the first sub-window 131 is a right-angled trapezoid and the predetermined opening 22 is an isosceles trapezoid, and four sides of the right-angled trapezoid and the isosceles trapezoid are not equal to each other.

In these embodiments of this application, the first sub-window 131 and the predetermined opening 22 have different shapes, such that the radiating surface formed by the rays emitted by the radioactive source 20 penetrating only the predetermined opening 22 and the radiating surface formed by the rays emitted by the radioactive source 20 penetrating the predetermined opening 22 and the first sub-window 131 have different shapes, such that the collimator 1 can adjust the radiating surface of the rays emitted by the radioactive source 20.

According to some embodiments of this application, the second sub-window 132 and the predetermined opening 22 have the same shape, and the second sub-window 132 and the predetermined opening 22 have the same size.

For example, the second sub-window 132 and the predetermined opening 22 are both circular, and the second sub-window 132 and the predetermined opening 22 have the same diameter; or the second sub-window 132 and the predetermined opening 22 are both rectangular, and the second sub-window 132 and the predetermined opening 22 have the same length and width.

In these embodiments of this application, the second sub-window 132 and the predetermined opening 22 have the same shape, and the second sub-window 132 and the predetermined opening 22 have the same size. In this way, when the driving mechanism 12 drives the second sub-window 132 to be opposite the predetermined opening 22, the radiating surface formed by the rays emitted by the radioactive source 20 penetrating the predetermined opening 22 and the second sub-window 132 is the same as the radiating surface formed by the rays emitted by the radioactive source 20 penetrating only the predetermined opening 22, such that the radiating surface can be adjusted by adjusting the first sub-window 131 and the second sub-window 132 to be opposite the predetermined opening 22.

In these embodiments of this application, the driving mechanism 12 can control the shield plate 11 to rotate around the rotating center 14, such that one of the first sub-window 131 and the second sub-window 132 corresponds to the predetermined opening 22, so as to adjust the shape of the radiating surface.

In an embodiment of this application, when the shield plate 11 is provided with a window 13 and the window 13 includes a first sub-window 131 and a second sub-window 132, the first sub-window 131 and the second sub-window 132 are distributed along a predetermined direction B, and the shield plate 11 is configured to be movable in a straight line along the predetermined direction B such that one of the first sub-window 131 and the second sub-window 132 corresponds to the predetermined opening 22.

In FIG. 7 and FIG. 8, the shield plates 11 move in a straight line, so the shield plates 11 in FIG. 7 and FIG. 8 have no rotating center.

In FIG. 7, the shield plate 11 is circular, and the first sub-window 131 and the second sub-window 132 are arranged along a direction of one diameter of the shield plate 11, to be specific, the shield plate 11 is movable in a straight line along the direction of one diameter of the shield plate 11. In FIG. 8, the shield plate 11 is rectangular, and the first sub-window 131 and the second sub-window 132 are arranged along a length direction of the shield plate 11, to be specific, the shield plate 11 is movable in a straight line along the length direction of the shield plate 11. In other implementations, the shield plate 11 may be of other shapes, and the first sub-window 131 and the second sub-window 132 may alternatively be arranged along other directions.

In these embodiments of this application, the driving mechanism 12 can control the shield plate 11 to be movable in a straight line along the predetermined direction B, such that one of the first sub-window 131 and the second sub-window 132 corresponds to the predetermined opening 22, so as to adjust the shape of the radiating surface.

In FIG. 4 to FIG. 7, the first sub-window 131 and the second sub-window 132 are both provided in one. In other implementations, two or more first sub-windows 131 and second sub-windows 132 may be provided on the shield plate 11, which is not limited in this application.

According to some embodiments of this application, the shield plate 11 is configured to shield the predetermined opening 22, and the driving mechanism 12 is configured to drive the shield plate 11 to move, so as to adjust a shielding area of the shield plate 11 to the predetermined opening 22 in a direction perpendicular to an optical axis of the radioactive source 20.

For example, the predetermined opening 22 is circular, the shield plate 11 is rectangular, and a length and width of the shield plate 11 are greater than the diameter of the predetermined opening 22, ensuring that the shield plate 11 can shield not only part of the predetermined opening 22 but also the entire predetermined opening 22.

In these embodiments of this application, the shape of the radiating surface can be adjusted by adjusting the shielding area of the shield plate 11 to the predetermined opening 22.

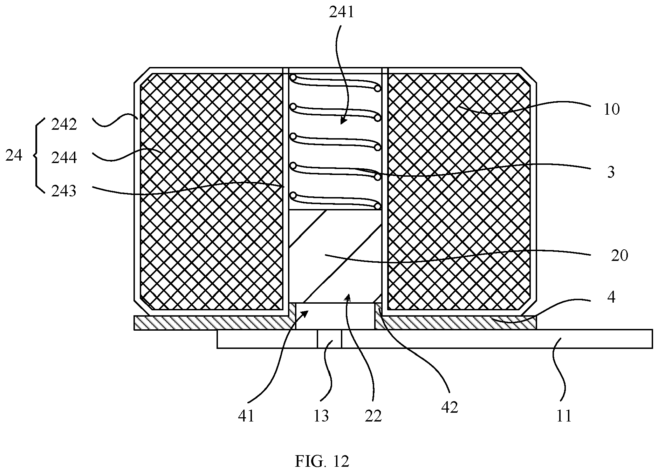

According to some embodiments of this application, FIG. 12 is a schematic structural diagram of a protective cartridge, a radioactive source, an elastic member, and a baffle fitting with each other according to an embodiment of this application. With reference to FIG. 11 and FIG. 12, the radioactive source kit further includes an elastic member 3 and a baffle 4. The elastic member 3 is located in the accommodating groove 21, where one end of the elastic member 3 is fixedly connected to the bottom of the accommodating groove 21, and the other end of the elastic member 3 is close to the predetermined opening 22. The baffle 4 is located at the predetermined opening 22, where at least part of the baffle 4 is located in the accommodating groove 21 and fixedly connected to the protective holder 2, the baffle 4 has a baffle opening 41, the baffle opening 41 corresponds to the predetermined opening 22, and the shield plate 11 is located on a side of the baffle 4 away from the protective holder 2.

FIG. 12 shows only the protective cartridge 24. Part of the elastic member 3 is located in the fixed groove 231, and one end of the elastic member 3 is fixedly connected to the bottom of the fixed groove 231; and another part of the elastic member 3 is located in the protective hole 241, and the radioactive source 20 is located in the protective hole 241. At least part of the baffle 4 is located in the protective hole 241 and fixedly connected to the protective cartridge 24.

For example, the middle of the baffle 4 has a circle of projections 42, and the baffle opening 41 goes through the projections 42, where the projections 42 are located in the protective hole 241. For example, the projection 42 has an external thread, and the protective cartridge 24 has an internal thread in the protective hole 241, such that the baffle 4 is connected to the protective cartridge 24 through the threads.

In these embodiments of this application, when the window 13 on the shield plate 11 corresponds to the predetermined opening 22, the rays emitted by the radioactive source 20 penetrate the predetermined opening 22, the baffle opening 41, and the window 13 to form a radiating surface on the inspected object.

In these embodiments of this application, at least part of the baffle 4 is located in the accommodating groove 21 and fixedly connected to the protective holder 2, which means that the baffle 4 forms a circle of protrusions in the accommodating groove 21, and the other end of the elastic member 3 is connected to the radioactive source 20, such that the elastic member 3 can press the radioactive source 20 on the baffle 4, in other words, the radioactive source 20 is fixed in the accommodating groove 21 through the elastic member 3 and the baffle 4, preventing the radioactive source 20 from shaking to affect the detection result.

For example, the elastic member 3 may be a compression spring.

Referring to FIG. 12, the protective cartridge 24 includes a protective jacket 242 and a protective liner 243, with protective lead 244 injected between the protective jacket 242 and the protective liner 243. The protective jacket 242 and the protective liner 243 support the protective lead 244, and the protective lead 244 is configured to shield the rays emitted by the radioactive source 20, avoiding causing harm to personnel.

For example, the protective jacket 242 is a steel jacket and the protective liner 243 is an aluminum liner.

According to some embodiments of this application, referring to FIG. 2 and FIG. 3, the radioactive source kit 10 further includes a position detector 5. The position detector 5 is located on at least one side of the protective holder 2, the position detector 5 is in communication connection with the driving mechanism 12, and the position detector 5 is configured to detect a position of the radioactive source kit 10 and generate a detection result based on the position of the radioactive source kit 10. The driving mechanism 12 is configured to perform, based on the detection result of the position detector 5, an operation of driving the collimator 1 to adjust the shape of the radiating surface of the rays emitted by the radioactive source 20.

In an implementation of these embodiments of this application, the coating region and the blank region on the electrode plate have different colors, and the position detector 5 can determine the position of the radioactive source kit 10 based on the detected color.

For example, the position detector 5 may be a fiber optic position detector.

In another implementation of these embodiments of this application, a reference object may be provided, and a distance between the radioactive source 20 and the reference object is detected to determine the position of the radioactive source kit 10.

In these embodiments of this application, the position detector 5 is configured to detect the position of the radioactive source kit 10 and generate the detection result based on the position of the radioactive source 20, and the driving mechanism 12 performs, based on the detection result of the position detector 5, the operation of driving the collimator 1 to adjust the shape of the radiating surface of the rays emitted by the radioactive source 20, such that the shape of the radiating surface can be automatically adjusted based on the position detected by the position detector 5, achieving automatic adjustment, which is more convenient.

According to some embodiments of this application, the radioactive source kit 10 includes at least two position detectors 5, the at least two position detectors 5 being located on two opposite sides of the protective holder 2 respectively.

In these embodiments of this application, the two position detectors 5 are located on two sides of the radioactive source kit 10 in the movement direction.

In these embodiments of this application, the two position detectors 5 may detect the position of the radioactive source 20 simultaneously, or one of the two position detectors 5 detects the position of the radioactive source 20.

For example, the radioactive source kit 10 moves leftward and rightward, and the two position detectors 5 are located on left and right sides of the radioactive source kit 10 respectively. When the radioactive source kit 10 moves leftward, the position detector 5 located on the left side of the radioactive source kit 10 detects that the position detector 5 corresponds to the blank region. Because the radioactive source 20 is located on the right side of the left position detector 5, it means that the radioactive source 20 is about to move to be opposite the blank region. The driving mechanism 12 can drive the shield plate 11 to move such that the first sub-window 131 on the shield plate 11 corresponds to the predetermined opening 22. When the radioactive source 20 moves to be opposite the blank region, a radiating surface matching the blank region can be formed on the blank region. Similarly, when the radioactive source kit 10 moves rightward, the position detector 5 located on the right side of the radioactive source kit 10 is configured to detect the position information, and the specific adjustment process is not described herein again.

In these embodiments of this application, it takes a certain time to adjust the shield plate 11, and the position of the position detector 5 can be determined first based on the position information detected by the position detector 5. A position to which the radioactive source is about to move is determined based on the position information of the position detector 5, and then the shield plate 11 is adjusted, such that the radioactive source 20 can form a radiating surface of a corresponding shape on the inspected object when moving to a corresponding detection region. The surface density gauge scans the electrode plate back and forth during use, and the two position detectors 5 are arranged on two sides of the radioactive source kit 10 in the movement direction. During the process of scanning back and forth, the detection region to which the radioactive source 20 is about to move can be determined in advance based on the position information detected by one of the two position detectors 5, and automatic adjustment can be achieved during the process of scanning back and forth, which is more convenient.

According to some embodiments of this application, referring to FIG. 2, the radioactive source kit 10 further includes a housing 6, where the housing 6 has an accommodating cavity 61, and the protective holder 2 and the collimator 1 are both located in the accommodating cavity 61.

In these embodiments of this application, the housing 6 may be made of metal, and the housing 6 may be made through a sheet metal process.

In these embodiments of this application, the housing 6 is arranged and the protective holder 2 and the collimator 1 are both placed in the accommodating cavity 61, so as to protect the protective holder 2 and the collimator 1 as well as the radioactive source 20.

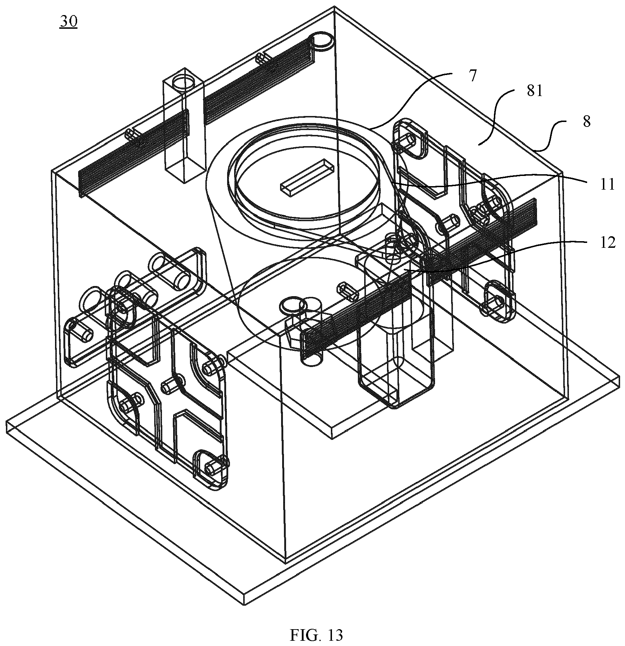

Some embodiments of this application provide a detector. FIG. 13 is a schematic structural diagram of a detector according to an embodiment of this application. Referring to FIG. 13, the detector 30 includes the collimator 1 in the foregoing embodiment and a detection element 7. The detection element 7 corresponds to the collimator 1, and the detection element 7 is configured to receive the rays penetrating the collimator 1.

In this embodiment of this application, the detection element 7 in the detector 30 is configured to receive rays penetrating the inspected object.

In this embodiment of this application, the rays emitted by the radioactive source 20 are detected by the detection element 7 after penetrating the inspected object and then the collimator 1, and a shape or size of a radiating surface received by the detection element 7 can be changed based on a shape of the inspected object, with a wider applicable range.

Referring to FIG. 13, the detector 30 further includes a detection housing 8. The detection housing 8 has a detection cavity 81, and the collimator 1 and the detection element 7 are both located in the detection cavity 81, so as to protect the collimator 1 and the detection element 7.

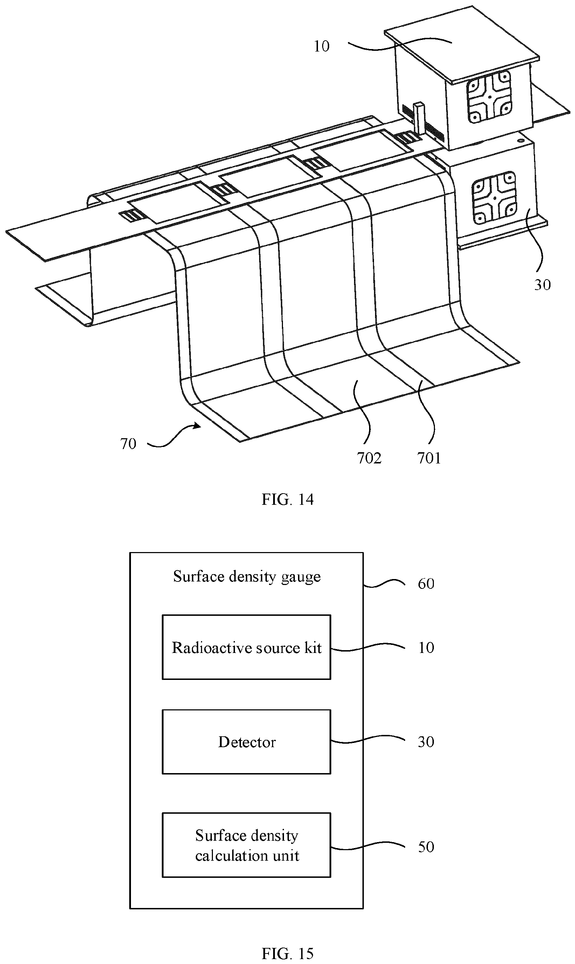

Some embodiments of this application provide a surface density gauge. FIG. 14 is a schematic structural diagram of a surface density gauge according to an embodiment of this application. Referring to FIG. 14, the surface density gauge includes the radioactive source kit 10 and the detector 30. Rays emitted by the radioactive source 20 are used to be projected onto a to-be-inspected object, and the detector 30 is configured to detect information about rays penetrating the to-be-inspected object, where the radioactive source kit 10 is the radioactive source kit 10 in the foregoing embodiment or the detector 30 is the detector 30 in the foregoing embodiment.

FIG. 15 is a block diagram of a surface density gauge according to an embodiment of this application. Referring to FIG. 15, the surface density gauge further includes a surface density calculation unit 50. The surface density calculation unit 50 is configured to calculate a surface density of the to-be-inspected object based on the information about the rays detected by the detector 30.

In an implementation of this embodiment of this application, the radioactive source kit 10 is the radioactive source kit 10 in the foregoing embodiment, which means that the radioactive source kit 10 includes the collimator 1, and the detector 30 is not the detector 30 in the foregoing embodiment, which means that the detector 30 does not include the collimator.

In another implementation of this embodiment of this application, the radioactive source kit 10 is not the radioactive source kit 10 in the foregoing embodiment, which means that the radioactive source kit 10 does not include the collimator 1, and the detector 30 is the detector 30 in the foregoing embodiment, which means that the detector 30 includes the collimator.

In another implementation of this embodiment of this application, the radioactive source kit 10 is the radioactive source kit 10 in the foregoing embodiment, which means that the radioactive source kit 10 includes the collimator 1, and the detector 30 is the detector 30 in the foregoing embodiment, which means that the detector 30 includes the collimator.

In this embodiment of this application, the surface density gauge can adjust the shape of the radiating surface based on the shape of the inspected object, making the surface density gauge have wider applicability.

An embodiment of this application provides a surface density gauge, where the surface density gauge includes a radioactive source kit 10, a detector 30, and a surface density calculation unit 50, rays emitted by a radioactive source 20 are used to be projected onto a to-be-inspected object, the detector 30 is configured to detect information about rays penetrating the to-be-inspected object, and the surface density calculation unit 50 is configured to calculate a surface density of the to-be-inspected object based on the information about the rays detected by the detector 30; and the surface density gauge further includes a collimator 1, the collimator 1 being disposed in the radioactive source kit 10 or the detector 30, where the collimator 1 includes a shield plate 11 and a driving mechanism 12, the shield plate 11 being configured to variably shield the rays emitted by the radioactive source 20, and the driving mechanism 12 being configured to drive the shield plate 11 to adjust a shape of a radiating surface of rays penetrating the collimator.

The shield plate 11 is provided with a window 13, and the driving mechanism 12 is configured to drive the shield plate 11 such that the rays can be emitted through the window 13.

The window 13 includes a first sub-window 131 and a second sub-window 132, the first sub-window 131 and the second sub-window 132 having different shapes.

In at least one direction, the first sub-window 131 and the second sub-window 132 have different sizes.

The driving mechanism 12 is configured to drive the shield plate 11 to move, so as to adjust a shielding area of the shield plate 11 to rays projected onto the collimator.

The shield plate 11 includes a first sub-shield plate 111 and a second sub-shield plate 112, and the driving mechanism 12 is configured to drive the first sub-shield plate 111 and the second sub-shield plate 112 to approach each other or leave away from each other to adjust the shielding area to the rays projected onto the collimator.

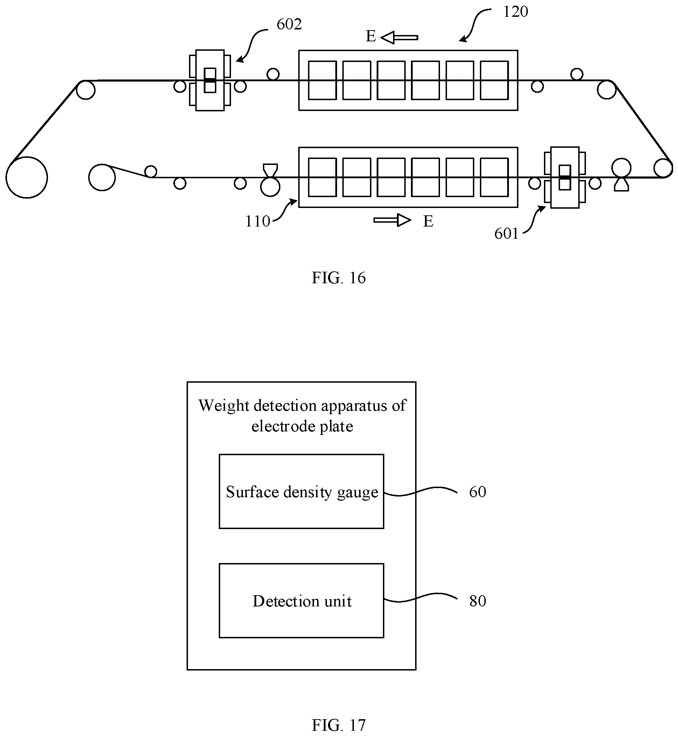

Some embodiments of this application provide a weight detection apparatus of electrode plate. FIG. 16 is a schematic structural diagram of an electrode plate production system according to an embodiment of this application. FIG. 17 is a block diagram of a weight detection apparatus of electrode plate according to an embodiment of this application. With reference to FIG. 14, FIG. 16, and FIG. 17, the weight detection apparatus of electrode plate includes the surface density gauge 60 and a detection unit 80. The surface density gauge 60 is configured to detect surface density information of an electrode plate 70, and a detection element 7 and the radioactive source 20 are configured to be disposed correspondingly on two opposite sides of the electrode plate 70. The detection unit 80 is in communication connection with the surface density gauge 60 and configured to calculate a weight of a slurry on the electrode plate 70 based on the surface density information of the electrode plate 70 calculated by the surface density gauge 60.

In these embodiments of this application, after the rays emitted by the radioactive source 20 penetrate the electrode plate 70 and then are detected by the detection element 7, the surface density gauge 60 calculates the surface density information of the electrode plate 70 based on energy of the rays emitted by the radioactive source 20 and energy of the rays detected by the detection element 7.

In this embodiment of this application, the surface density gauge 60 can adjust a shape of a radiating surface formed on the electrode plate 70 by the surface density gauge 60 based on shapes of different regions of the electrode plate 70, such that the surface density gauge can detect different regions of the electrode plate 70 simultaneously. Then, the detection unit 80 calculates the weight of the slurry on the electrode plate 70 based on the detected surface density information.

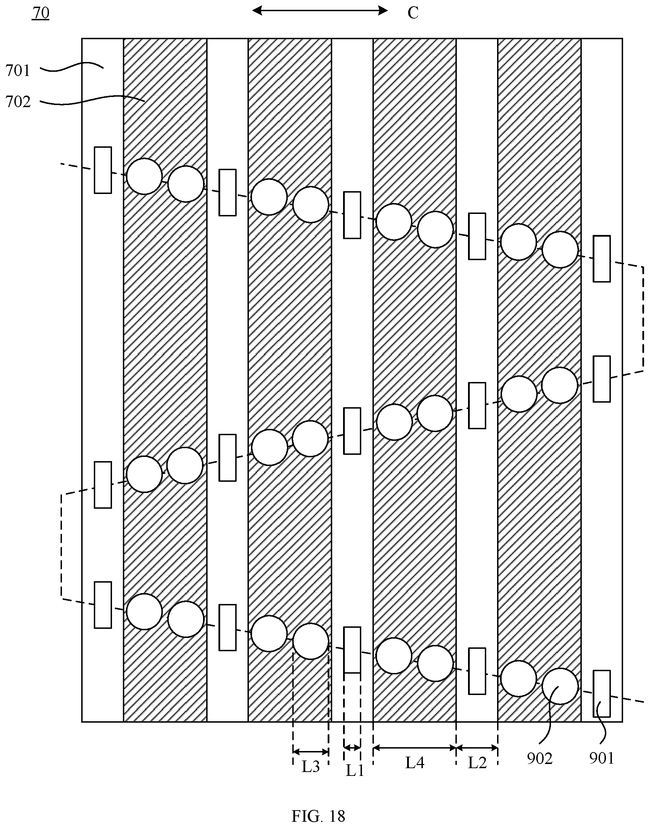

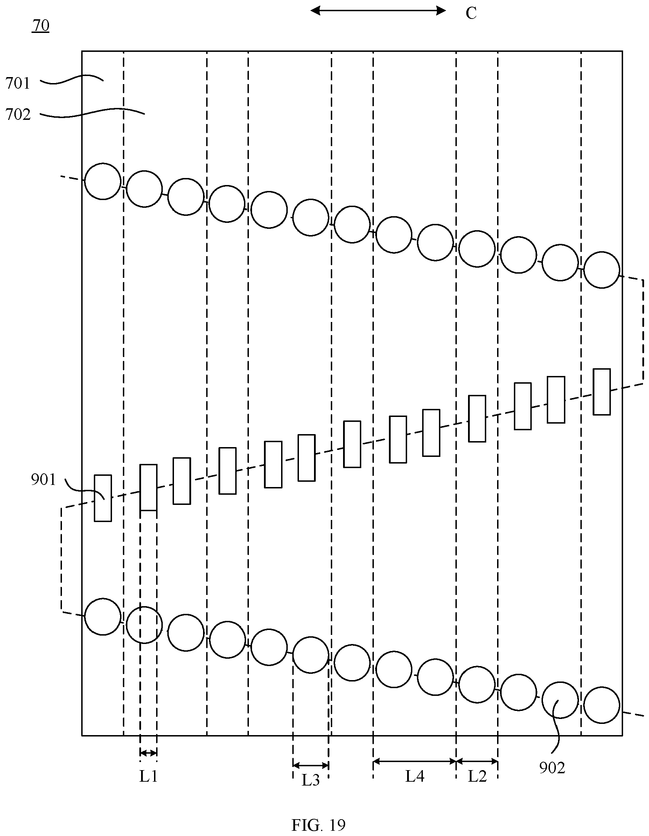

According to some embodiments of this application, FIG. 18 is a top view of an electrode plate according to an embodiment of this application. FIG. 19 is a top view of an electrode plate according to an embodiment of this application. The electrode plate in FIG. 18 is coated with a slurry, and the electrode plate in FIG. 19 is coated with no slurry. Referring to FIG. 18 and FIG. 19, the electrode plate 70 includes a plurality of blank regions 701 and at least one coating region 702 that are arranged along a width direction C of the electrode plate 70, the coating region 702 and the blank regions 701 being staggered. The surface density gauge 60 (not shown in FIG. 18 and FIG. 19) is configured to scan the electrode plate 70 along the width direction C of the electrode plate 70, and the radiating surface includes a first radiating surface 901 and a second radiating surface 902, the first radiating surface 901 being a projection surface of the radioactive source 20 on the blank regions 701 and the second radiating surface 902 being a projection surface of the radioactive source 20 on the coating region 702. In the width direction C of the electrode plate 70, a width L1 of the first radiating surface 901 is smaller than a width L2 of any one of the blank regions 701 of the electrode plate 70, and a width L3 of the second radiating surface 902 is smaller than a width L4 of at least one coating region 702 of the electrode plate 70 and larger than the width L2 of any one of the blank regions 701 of the electrode plate 70.

For example, the width L2 of the blank region 701 is greater than or equal to 15 mm and less than or equal to 50 mm. The width L4 of the coating region 702 is greater than or equal to 100 mm and less than or equal to 500 mm.

In this embodiment of this application, the surface density gauge 60 scans the electrode plate 70 back and forth along the width direction C of the electrode plate 70 to leave a plurality of second radiating surfaces 902 on the coating region 702 of the electrode plate 70, and calculates a weight of a slurry on the electrode plate corresponding to each second radiating surface 902 on the coating region 702. Then, a coating mass can be determined based on the change in the weight of the slurry on the electrode plate corresponding to the second radiating surface 902.

In this embodiment of this application, when the weight detection apparatus of electrode plate performs detection on the electrode plate 70 back and forth along the width direction of the electrode plate 70, the electrode plate 70 moves along a length direction, such that the scanning track displayed is "S".

In this embodiment of this application, the width L1 of the first radiating surface 901 is smaller than the width L2 of any one of the blank regions 701 of the electrode plate 70, so as to ensure that the first radiating surface 901 can completely fall within the blank region 701, preventing the first radiating surface 901 from falling within the coating region 702 to affect the detection result. The width L3 of the second radiating surface 902 is smaller than the width L4 of any one of the coating region 702 of the electrode plate 70 and larger than the width L2 of any one of the blank regions 701 of the electrode plate 70, such that the second radiating surface 902 can completely fall within the coating region 702, ensuring that the second radiating surface 902 is large enough while the coating region 702 is detected. A larger area means higher accuracy, improving accuracy of the detection result.

In an implementation of some embodiments of this application, referring to FIG. 18, during one scanning of the electrode plate 70 by the surface density gauge 60 along the width direction C of the electrode plate 70, the first radiating surface 901 and the second radiating surface 902 have different shapes.

Because the blank regions 701 and the coating region 702 are arranged along the width direction C of the electrode plate 70, the surface density gauge 60 goes through the blank regions 701 and the coating region 702 during the one scanning.

In these embodiments of this application, during the scanning, the first radiating surface 901 or the second radiating surface 902 is adjusted according to different regions of the electrode plate, such that the blank regions 701 and the coating region 702 can be detected simultaneously during the one scanning.

According to some embodiments of this application, when the window 13 on the shield plate 11 includes a first sub-window 131 and a second sub-window 132, the first sub-window 131 is rectangular, the first radiating surface 901 and the first sub-window 131 have the same shape, and the first radiating surface 901 and the first sub-window 131 have the same size; and the second sub-window 132 is circular, the second radiating surface 902 and the second sub-window 132 have the same shape, and the second radiating surface 902 and the second sub-window 132 have the same size.

In these embodiments of this application, a width of the first sub-window 131 is greater than or equal to 5 mm and less than or equal to 20 mm.

In these embodiments of this application, a radius of the second sub-window 132 is greater than or equal to 10 mm and less than or equal to 40 mm.

In these embodiments of this application, the first radiating surface 901 and the second radiating surface 902 are adjusted by directly adjusting the first sub-window 131 and the second sub-window 132. In this way, only the shield plate 11 is adjusted to rotate, which is convenient.

In addition, because the width of the blank region 701 is small and the first sub-window 131 is rectangular, the width of the rectangle can be controlled to adjust the width of the first radiating surface 901, such that the first radiating surface 901 can match the blank region 701 in size. Because the width of the coating region 702 is large, the second sub-window 132 being set as circular in shape can match the coating region 702 in both length and width.

According to some embodiments of this application, when the shield plate 11 has a window 13, the window 13 is rectangular, the first radiating surface 901 and the window 13 have the same shape, and the first radiating surface 901 and the window 13 have the same size; and a predetermined opening 22 is circular, the second radiating surface 902 and the predetermined opening 22 have the same shape, and the second radiating surface 902 and the predetermined opening 22 have the same size.

In these embodiments of this application, when the shield plate 11 has the window 13, the shield plate 11 can be adjusted to shield or not shield the predetermined opening 22 to adjust the first radiating surface 901 and the second radiating surface 902. For example, when the shield plate 11 shields the predetermined opening 22 and the window 13 corresponds to the predetermined opening 22, the first radiating surface 901 is formed on the electrode plate; and when the shield plate 11 is offset from the predetermined opening 22, the second radiating surface 902 is formed on the electrode plate.

According to some embodiments of this application, referring to FIG. 19, during one scanning of the electrode plate 70 by the surface density gauge 60 along the width direction C of the electrode plate 70, the first radiating surface 901 and the second radiating surface 902 have the same shape. Referring to FIG. 18, during two consecutive scanning of the electrode plate 70 by the surface density gauge 60 along the width direction C of the electrode plate 70, the first radiating surface 901 and the second radiating surface 902 have different shapes.

The electrode plate further includes thinned regions, and the thinned regions are regions on two sides of the coating region 702, and mainly used for window change when the surface density gauge moves to this position. Actually, the thinned region is the same as the coating region 702, which are regions coated with a slurry.

In these embodiments of this application, during scanning, one radiating surface can be formed in one scanning and another radiating surface can be formed in the next scanning. In this way, the blank region 701 and the coating region 702 of the electrode plate 70 can also be detected.

According to some embodiments of this application, referring to FIG. 16, the weight detection apparatus of electrode plate includes a first surface density gauge 601 and a second surface density gauge 602. The first surface density gauge 601 is configured to detect a first surface density of the blank region 701 and a second surface density of the coating region 702 for the electrode plate 70 coated with no slurry. The first surface density gauge 601 is further configured to detect a third surface density of the blank region 701 and a fourth surface density of the coating region 702 for the electrode plate 70 coated with a slurry on a first surface of the coating region 702. The first surface density gauge 601 is the surface density gauge according to claim 18. The second surface density gauge 602 is configured to detect a fifth surface density of the coating region 702 for the electrode plate 70 coated with a slurry on both the first surface and a second surface of the coating region 702, where the first surface and the second surface are two opposite surfaces of the electrode plate 70. The second surface density gauge 602 is the surface density gauge according to claim 18. The detection unit 80 is configured to determine a mass relationship coefficient between the electrode plate 70 in the coating region 702 and the electrode plate 70 in the blank region 701 when no slurry is applied, based on an area of the first radiating surface 901, an area of the second radiating surface 902, the first surface density, and the second surface density. The detection unit 80 is configured to determine a weight of a slurry on the first surface based on the third surface density, the fourth surface density, and the mass relationship coefficient, and the detection unit 80 is further configured to determine a weight of a slurry on the second surface based on the third surface density and the fifth surface density.

In these embodiments of this application, the weight of the slurry can be determined by two surface density gauges in the foregoing method, reducing the number of the density gauges, with simple structure and reduced costs.

An embodiment of this application provides an electrode plate production system, where the electrode plate production system includes: a coater configured to apply a slurry onto a coating region 702 on a surface of an electrode plate 70; and a surface density gauge configured to detect a surface density of a blank region 701 of the electrode plate 70 with a first-shaped radiating surface and detect a surface density of the coating region 702 of the electrode plate 70 with a second-shaped radiating surface.

The surface density gauge can be configured to detect the surface densities of both the blank region and the coating region simultaneously.

In this embodiment of this application, the surface density gauge may be the surface density gauge in the foregoing embodiment, the first shape may be the shape of the first radiating surface, and the second shape may be the shape of the second radiating surface.

In this embodiment of this application, two coaters and two surface density gauges may be arranged, for example, a first coater 110, a second coater 120, a first surface density gauge 601, and a second surface density gauge 602.

An embodiment of this application provides an electrode plate production system. Referring to FIG. 16, the electrode plate production system includes the weight detection apparatus of electrode plate, first coater 110, and second coater 120 in the foregoing embodiment. The first coater 110 is configured to apply a slurry onto a first surface of the electrode plate 70. The second coater 120 is configured to apply a slurry onto a second surface of the electrode plate 70. The detection unit 80 is configured to calculate a weight of the slurry on the first surface and/or a weight of the slurry on the second surface based on surface density information of the electrode plate 70 calculated by the surface density gauge 60.

In this embodiment of this application, the first coater 110 and the second coater 120 are configured to apply the slurry onto the first surface and second surface of the electrode plate 70 respectively.

According to some embodiments of this application, in a conveying direction E of the electrode plate 70, the first surface density gauge 601 is located between the first coater 110 and the second coater 120, and the second surface density gauge 602 is located behind the second coater 120.

In these embodiments of this application, the first coater 110 applies the slurry onto the first surface of the electrode plate 70, and the first surface density gauge 601 is configured to detect the weight of the slurry applied on the first surface; and the second coater 120 applies the slurry onto the second surface of the electrode plate 70, and the second surface density gauge 602 is configured to detect the weight of the slurry applied on the second surface. The weights of the slurries applied onto the two surfaces can be detected by two density gauges, reducing the number of the density gauges, with simple structure and reduced costs.

According to some embodiments of this application, the second radiating surface 902 formed on the electrode plate 70 by the first surface density gauge 601 and the second radiating surface 902 formed on the electrode plate 70 by the second surface density gauge 602 have the same position and shape.

In these embodiments of this application, because the second radiating surface 902 formed on the electrode plate 70 by the first surface density gauge 601 and the second radiating surface 902 formed on the electrode plate 70 by the second surface density gauge 602 have the same position and shape, detection at the same point is achieved, with higher accuracy.

The electrode plate production system provided in the embodiments of this application can detect the weights of the slurries applied onto the two surfaces using two density gauges, reducing the number of the density gauges, with simple structure and reduced costs.

An embodiment of this application provides an electrode plate production system, where the electrode plate production system includes a coater, a first surface density gauge, and a second surface density gauge. The coater is configured to apply a slurry onto a coating region 702 on a surface of an electrode plate 70. The first surface density gauge is configured to detect a surface density of a blank region 701 of the electrode plate 70. The second surface density gauge is configured to detect a surface density of the coating region 702 of the electrode plate 70. Radiating surfaces formed on the electrode plate by the first surface density gauge and the second surface density gauge have different shapes.

In this embodiment of this application, the first surface density gauge forms only the first radiating surface and configured to detect the surface density of the blank region on two opposite surfaces of the electrode plate. The second surface density gauge forms only the second radiating surface and configured to detect the surface density of the coating region on two opposite surfaces of the electrode plate.

An embodiment of this application provides a radioactive source kit 10, where the radioactive source kit 10 includes a collimator 1, a protective holder 2, an elastic member 3, a baffle 4, a position detector 5, and a housing 6.

The collimator 1 includes a shield plate 11 and a driving mechanism 12, the shield plate 11 is provided with a window 13, and the driving mechanism 12 is a motor. The protective holder 2 has an accommodating groove 21, the accommodating groove 21 has a predetermined opening 22, the accommodating groove 21 is configured to place a radioactive source 20, and a size of the window 13 is smaller than a size of the predetermined opening 22. The driving mechanism 12 can control the shield plate 11 to rotate around a rotating center 14, such that the window 13 corresponds to or is offset from the predetermined opening 22, so as to adjust the shape of the radiating surface. The elastic member 3 is located in the accommodating groove 21, where one end of the elastic member 3 is fixedly connected to the bottom of the accommodating groove 21, and the other end of the elastic member 3 is close to the predetermined opening 22. The baffle 4 is located at the predetermined opening 22, where at least part of the baffle 4 is located in the accommodating groove 21 and fixedly connected to the protective holder 2, the baffle 4 has a baffle opening 41, the baffle opening 41 corresponds to the predetermined opening 22, and the shield plate 11 is located on a side of the baffle 4 away from the protective holder 2. The radioactive source kit 10 includes two position detectors 5, the two position detectors 5 being located on two opposite sides of the protective holder 2 respectively. The housing 6 has an accommodating cavity 61, where the protective holder 2 and the collimator 1 are both located in the accommodating cavity 61.

In conclusion, it should be noted that the foregoing embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of claims and summary in this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A collimator, wherein the collimator (1) comprises:
a shield plate (11) configured to variably shield rays projected onto the collimator (1); and
a driving mechanism (12) configured to drive the shield plate (11) to adjust a shape of a radiating surface of rays penetrating the collimator (1).

2. The collimator according to claim 1, wherein the shield plate (11) is provided with a window (13), and the driving mechanism (12) is configured to drive the shield plate (11) such that the rays are able to be emitted through the window (13).

3. The collimator according to claim 2, wherein the window (13) comprises a first sub-window (131) and a second sub-window (132), the first sub-window (131) and the second sub-window (132) having different shapes.

4. The collimator according to claim 3, wherein in at least one direction, the first sub-window (131) and the second sub-window (132) have different sizes.

5. The collimator according to any one of claims 1 to 4, wherein the driving mechanism (12) is configured to drive the shield plate (11) to move, so as to adjust a shielding area of the shield plate (11) to the rays projected onto the collimator (1).

6. The collimator according to claim 5, wherein the shield plate (11) comprises a first sub-shield plate (111) and a second sub-shield plate (112), and the driving mechanism (12) is configured to drive the first sub-shield plate (111) and the second sub-shield plate (112) to approach each other or leave away from each other to adjust the shielding area to the rays projected onto the collimator (1).

7. A radioactive source kit, wherein the radioactive source kit (10) comprises a radioactive source (20) and the collimator (1) according to any one of claims 1 to 6, and rays emitted by the radioactive source (20) are emitted through the collimator (1).

8. The radioactive source kit according to claim 7, wherein the radioactive source kit (10) further comprises:
a protective holder (2) having an accommodating groove (21), the accommodating groove (21) having a predetermined opening (22);
wherein the radioactive source (20) is placed in the accommodating groove (21), the rays emitted by the radioactive source (20) are emitted from the predetermined opening (22), and the shield plate (11) is located at the predetermined opening (22).

9. The radioactive source kit according to claim 8, wherein when the shield plate (11) is provided with a window (13) and the window (13) comprises a first sub-window (131) and a second sub-window (132),
the shield plate (11) covers the predetermined opening (22), the first sub-window (131) and the second sub-window (132) are distributed along a circumferential direction A of the shield plate (11), and the shield plate (11) is configured to be rotatable such that one of the first sub-window (131) and the second sub-window (132) corresponds to the predetermined opening (22).

10. The radioactive source kit according to claim 8 or 9, wherein when the shield plate (11) is provided with a window (13) and the window (13) comprises a first sub-window (131) and a second sub-window (132),
the first sub-window (131) and the second sub-window (132) are distributed along a predetermined direction B, and the shield plate (11) is configured to be movable in a straight line along the predetermined direction B such that one of the first sub-window (131) and the second sub-window (132) corresponds to the predetermined opening (22).

11. The radioactive source kit according to any one of claims 8 to 10, wherein the shield plate (11) is configured to shield the predetermined opening (22), and the driving mechanism (12) is configured to drive the shield plate (11) to move, so as to adjust a shielding area of the shield plate (11) to the predetermined opening (22) in a direction perpendicular to an optical axis of the radioactive source (20).

12. The radioactive source kit according to any one of claims 8 to 11, wherein the radioactive source kit (10) further comprises:
an elastic member (3) located in the accommodating groove (21), wherein one end of the elastic member (3) is fixedly connected to the bottom of the accommodating groove (21), and the other end of the elastic member (3) is close to the predetermined opening (22); and
a baffle (4) located at the predetermined opening (22), wherein at least part of the baffle (4) is located in the accommodating groove (21) and fixedly connected to the protective holder (2), the baffle (4) has a baffle opening (41), the baffle opening (41) corresponds to the predetermined opening (22), and the shield plate (11) is located on a side of the baffle (4) away from the protective holder (2).

13. The radioactive source kit according to any one of claims 8 to 12, wherein the radioactive source kit (10) further comprises:
a position detector (5) located on at least one side of the protective holder (2), wherein the position detector (5) is in communication connection with the driving mechanism (12), and the position detector (5) is configured to detect a position of the radioactive source kit (10) and generate a detection result based on the position of the radioactive source kit (10);
wherein the driving mechanism (12) is configured to perform, based on the detection result of the position detector (5), an operation of driving the collimator (1) to adjust a shape of a radiating surface of rays emitted by the radioactive source (20).

14. The radioactive source kit according to claim 13, wherein the radioactive source kit (10) comprises at least two position detectors (5), the at least two position detectors (5) being located on two opposite sides of the protective holder (2) respectively.

15. The radioactive source kit according to claim 14, wherein the position detector (5) is a fiber optic position detector.

16. The radioactive source kit according to any one of claims 8 to 15, wherein the radioactive source kit (10) further comprises:
a housing (6) having an accommodating cavity (61), wherein the protective holder (2) and the collimator (1) are both located in the accommodating cavity (61).

17. A detector, wherein the detector (30) comprises:
the collimator (1) according to any one of claims 1 to 6; and
a detection element (7) opposite the collimator (1), wherein the detection element (7) is configured to receive the rays penetrating the collimator (1).

18. A surface density gauge, wherein the surface density gauge comprises a radioactive source kit (10), a detector (30), and a surface density calculation unit (50); and
rays emitted by a radioactive source (20) are used to be proj ected onto a to-be-inspected object, the detector (30) is configured to detect information about rays penetrating the to-be-inspected object, and the surface density calculation unit (50) is configured to calculate a surface density of the to-be-inspected object based on the information about the rays detected by the detector (30);
wherein the radioactive source kit (10) and the detector (30) satisfy at least one of the following conditions:
the radioactive source kit (10) is the radioactive source kit (10) according to any one of claims 7 to 16; and
the detector (30) is the detector (30) according to claim 17.

19. A surface density gauge, wherein the surface density gauge comprises a radioactive source kit (10), a detector (30), and a surface density calculation unit (50), rays emitted by a radioactive source (20) are used to be projected onto a to-be-inspected object, the detector (30) is configured to detect information about rays penetrating the to-be-inspected object, and the surface density calculation unit (50) is configured to calculate a surface density of the to-be-inspected object based on the information about the rays detected by the detector (30); and
the surface density gauge further comprises a collimator (1), the collimator (1) being disposed in the radioactive source kit (10) or the detector (30),
wherein the collimator (1) comprises a shield plate (11) and a driving mechanism (12), the shield plate (11) being configured to variably shield the rays emitted by the radioactive source (20), and the driving mechanism (12) being configured to drive the shield plate (11) to adjust a shape of a radiating surface of rays penetrating the collimator (1).

20. The surface density gauge according to claim 19, wherein the shield plate (11) is provided with a window (13), and the driving mechanism (12) is configured to drive the shield plate (11) such that the rays are able to be emitted through the window (13).

21. The surface density gauge according to claim 20, wherein the window (13) comprises a first sub-window (131) and a second sub-window (132), the first sub-window (131) and the second sub-window (132) having different shapes.

22. The surface density gauge according to claim 21, wherein in at least one direction, the first sub-window (131) and the second sub-window (132) have different sizes.

23. The surface density gauge according to any one of claims 19 to 22, wherein the driving mechanism (12) is configured to drive the shield plate (11) to move, so as to adjust a shielding area of the shield plate (11) to rays projected onto the collimator (1).

24. The surface density gauge according to claim 23, wherein the shield plate (11) comprises a first sub-shield plate (111) and a second sub-shield plate (112), and the driving mechanism (12) is configured to drive the first sub-shield plate (111) and the second sub-shield plate (112) to approach each other or leave away from each other to adjust the shielding area to the rays projected onto the collimator (1).

25. A weight detection apparatus of electrode plate, wherein the weight detection apparatus of electrode plate comprises:
the surface density gauge (60) according to any one of claims 18 to 24, configured to detect surface density information of an electrode plate (70), wherein a detection element (7) of the detector (30) and the radioactive source (20) are configured to be disposed correspondingly on two opposite sides of the electrode plate (70); and
a detection unit (80) in communication connection with the surface density gauge (60) and configured to calculate a weight of a slurry on the electrode plate (70) based on the surface density information of the electrode plate (70) calculated by the surface density gauge (60).

26. The weight detection apparatus of electrode plate according to claim 25, wherein the electrode plate (70) comprises a plurality of blank regions (701) and at least one coating region (702) that are staggered along a width direction of the electrode plate (70), and the radiating surface comprises a first radiating surface (901) and a second radiating surface (902), the first radiating surface (901) being a projection surface of the radioactive source (20) on the blank region (701) and the second radiating surface (902) being a projection surface of the radioactive source (20) on the coating region (702); and
wherein the surface density gauge (60) is configured to scan the electrode plate (70) along the width direction C of the electrode plate (70), wherein during one scanning of the electrode plate (70) by the surface density gauge (60) along the width direction C of the electrode plate (70), the first radiating surface (901) and the second radiating surface (902) have different shapes.

27. The weight detection apparatus of electrode plate according to claim 26, wherein the window (13) on the shield plate (11) comprises a first sub-window (131) and a second sub-window (132);
wherein the first sub-window (131) is rectangular and the second sub-window (132) is circular, and a side length of the first sub-window (131) in the width direction C of the electrode plate is smaller than a diameter of the second sub-window (132).

28. An electrode plate production system, wherein the electrode plate production system comprises:
a coater configured to apply a slurry onto a coating region (702) on a surface of an electrode plate (70); and
a surface density gauge configured to detect a surface density of a blank region (701) of the electrode plate (70) with a first-shaped radiating surface and detect a surface density of the coating region (702) of the electrode plate (70) with a second-shaped radiating surface.

29. An electrode plate production system, wherein the electrode plate production system comprises:
a coater (110) configured to apply a slurry onto a coating region (702) on a surface of an electrode plate (70);
a first surface density gauge configured to detect a surface density of a blank region (701) of the electrode plate (70); and
a second surface density gauge configured to detect a surface density of the coating region (702) of the electrode plate (70);
wherein radiating surfaces formed on the electrode plate (70) by the first surface density gauge and the second surface density gauge have different shapes.
